Europäisches Patentamt

European Patent Office

Office européen des brevets

(11) Publication number: **0 310 055 B1**

# EUROPEAN PATENT SPECIFICATION

(45) Date of publication of patent specification: **12.01.94**   (51) Int. Cl.5: **H04B 3/23**

(21) Application number: **88116052.7**

(22) Date of filing: **29.09.88**

(54) Adaptive echo-canceller with double-talker detection.

(30) Priority: **02.10.87 US 104320**

(43) Date of publication of application:
**05.04.89 Bulletin 89/14**

(45) Publication of the grant of the patent:
**12.01.94 Bulletin 94/02**

(84) Designated Contracting States:
**DE FR GB**

(56) References cited:
**EP-A- 0 111 938
EP-A- 0 164 159
GB-A- 2 086 196
US-A- 4 129 753**

**INTERNATIONAL JOURNAL OF ELECTRON-ICS, vol. 59, no. 3, September 1985, pages 365-368, London, GB; C.P. KWONG et al.: "A variation of the sign algorithm for adaptive filtering"**

**IEEE TRANSACTIONS ON ACOUSTICS SPEECH AND SIGNAL PROCESSING, vol. ASSP-28, no.5, October 1980, pages 590-592, IEEE, New York, US; R.H. SEEGAL: "The canonical signed digit structure for FIR filters"**

**PATENT ABSTRACTS OF JAPAN, vol. 6, no. 238 (E-144)[1116], 26th November 1982 & JP-A-57 140 040**

(73) Proprietor: **ADVANCED MICRO DEVICES, INC.
901 Thompson Place
P.O. Box 3453
Sunnyvale, CA 94088(US)**

(72) Inventor: **Vairavan, Kannan P.
3300 Parker Lane, No. 115
Austin Texas 78741(US)**
Inventor: **McLeod, Paul
3209 I.H. 35 South, No. 2020
Austin Texas 78741(US)**

(74) Representative: **Altenburg, Udo, Dipl.-Phys. et al
Patent- und Rechtsanwälte
Bardehle-Pagenberg-Dost-Altenburg & Partner
Postfach 86 06 20
D-81633 München (DE)**

**Description**

Co-pending application of particular interest to the instant application is EP-A-0292 189 filed 11.05.88, entitled "Updating Canonic Signed Digit Filter Coefficients"

FIELD OF THE INVENTION

The present invention relates to digital filters and, more particularly, to an adaptive filter providing echo-cancellation, especially to such a filter having canonic signed digit filter coefficients, and advantageously used in conjunction with double-talker detection.

BACKGROUND OF THE INVENTION

Digital filters are used in adaptive circuits, such as adaptive subscriber line audio-processing circuits (SLACs), which require periodic updating of the filter coefficients. For example, a SLAC may employ a filter to cancel echos, for reflected signals, which occur if there is an impedance mismatch on the transmission lines interconnecting SLACs.

An adaptive filter continuously adjusts its coefficients to optimize the transfer function it implements. Without the adaptation feature, a user must calculate a few sets of filter coefficients for the most commonly-encountered subscriber line characteristics and then choose the closest set of coefficients suited to the particular line used in the application. The selected set will not provide the best echo cancellation for instance, under all circumstances, especially if line impedance varies over time. By employing adaptation, a user does not have to calculate any coefficients and at the same time gets a continuously-updated echo-cancellation function which can respond to changing line characteristics.

Digitally-encoded audio signals are commonly transmitted on networks employing SLACs. Accordingly, there is a need for adaptive digital filters which provide an echo cancellation function. Another application for digital filtering is in modulator-demodulators (Modems) used for transmission of digital data over telephone lines.

Because of procedures used during initial connection of SLACs and modems, echo-cancellers are deactivated for the duration of the initial establishment of the interconnection. Furthermore, the echo canceller must be deactivated if there is a "talker" at the near end of the interconnection. The adaptive filter must be prevented from updating filter coefficients during either of these circumstances. Thus, "double talker" detection is advantageously used in conjunction with an adaptive filter.

A fast convergence method and system for echo cancelling is known, for example, from EP 111 938. This apparatus for cancelling echo entailed by impedance mismatching in a two-wire/four-wire conversion circuit provides an increase of the tap correction amount at the start of operation because the residual echo level of that instant is large, while it is decreased as the convergence proceeds in accordance with the then decreasing residual echo level. In this way, the convergence time required for an echo canceller is shortened. It is a disadvantage that this apparatus requires three multipliers for the implementation of the proposed method.

A circuit for automatically digitally synthesizing an output impedance which may be a matching line terminating impedance is disclosed in GB-A-2,086,196. The means for establishing the desired output impedance characteristic is accomplished using a recursive digital filter arrangement connected to receive the sum of digital versions of receive and transmit signals, the filter providing the predetermined output impedance. This prior art reference does not disclose an adaptive system on a continuous basis. There is the requirement that there be an absence of double talk during the equalization process by which impedances are equalized within the circuit.

A variation of the sign algorithm for adaptive filtering is disclosed by C.P. Kwong and H.P. Wong, in Int. J. Electronics 1985, vol. 59, no. 3, pp. 365-368 This is a general discussion of a signed algorithm for adaptive filtering. The algorithm disclosed is of limited utility because it only sees one of two step sizes.

The above mentioned methods and systems for echo cancelling are thus suffering deficiencies so that there is still a desire for improved methods and systems.

It is thus the object of the present invention to devise a method and system for echo cancelling providing a response which is independent of the amplitude of the error signal representing the difference between the desired signal and the generated signal. The convergence should not be influenced by the size of the error signal but only by the sign of the error signal. In another aspect of the invention the updating of the adaptive filter coefficients should be inhibited, said function being dependent upon the fact whether signals received by the adaptive filter come from the far-end or the near-end talker.

This and other objects are achieved by a novel method and apparatus as characterized in claim 1 and claim 5, respectively, and will become more apparent when taken in conjunction with the following description and attached drawings showing a preferred embodiment of the invention.

BRIEF DESCRIPTION OF THE DRAWINGS

Fig. 1 illustrates an adaptive digital filter employed as an echo-canceller;

Fig. 2 illustrates employment of an energy-averaging filter in conjunction with the echo-cancelling filter of this invention;

Fig. 3 is a signal-flow diagram illustrating the transfer function to be implemented by the energy-averaging filter;

Fig. 4A is a diagrammatic illustration of the updating method of filter tap coefficients of this invention for a 3 nibble CSD format; and

Fig. 4B is a diagrammatic illustration of the direction of movement through the filter tap coefficients employed by the method of this invention for a 3 nibble CSD format.

DETAILED DESCRIPTION OF A PREFERRED EMBODIMENT

The present invention employs a digital filter in an adaptive circuit. An adaptive circuit is one in which the filter coefficients are not fixed values, but are updated, i.e., incremented or decremented, frequently. In the present invention, the filter provides an echo-cancelling function, and accordingly, the filter must adapt to changes in transmission line conditions, operating voltage, etc. A related, co-pending application entitled "Updating Cannonic Signed Digit Filter Coefficients" describes adaptive filters in greater detail and such description is incorporated by reference herein.

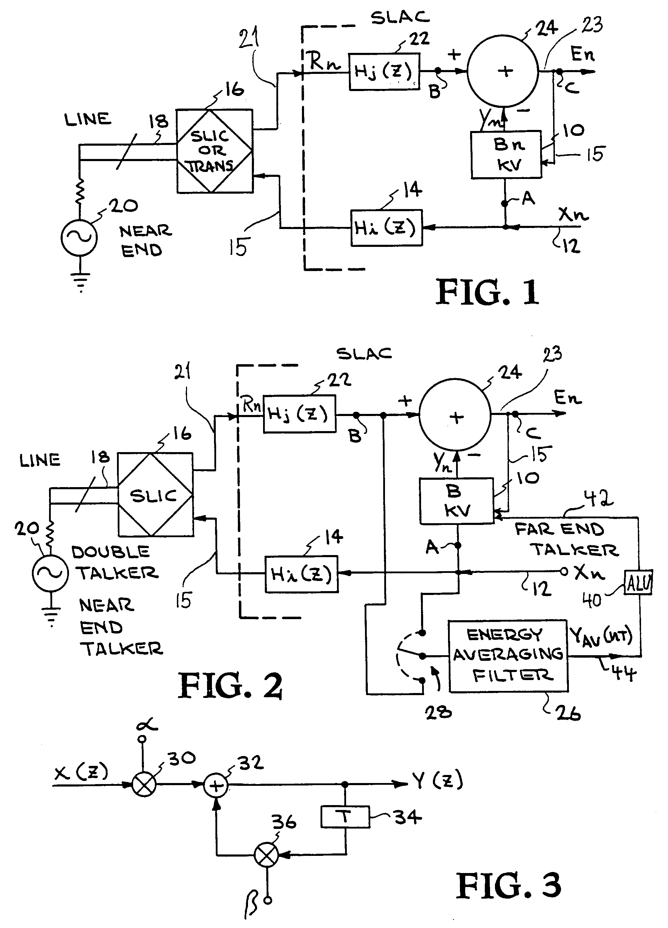

Fig. 1 is a block diagram illustrating the use in a "near-end" transceiver of an adaptive digital filter 10 as an echo-canceller. The filter 10 is an N-tap finite impulse response (FIR) filter of a type known as discrete-time adaptive filter and generates an output signal Yn from a received input signal Xn, where n measures time intervals. After the nth iteration

$$Xn = [xn \; xn\text{-}1 \; ... \; xn\text{-}(N\text{-}1)]^r$$

The filter 10 is characterized by a set of tap coefficients

$$Bn = [bn_0 \; bn_2 \; ... \; bn(N\text{ -}1)]^r$$

which are updated each time interval.

The output signal at the nth time interval is related to the previous N inputs and the previous N filter coefficients by the matrix equation.

$$Yn = Xn^r \cdot Bn \quad (Equ. 1)$$

An error signal, En, is computed by

$$En = dn\text{-}Yn \quad (Equ. 2)$$

where dn is the desired output signal to be generated by filter 10.

The object of updating the filter-coefficients is to minimize the error En in the shortest number of iterations. As described in the related, co-pending application, one method of coefficient updating is called a sign algorithm and is described by the equation

$$Bn + 1 = Bn + \Delta \cdot sign (Xn \cdot En) \quad (Equ. 3)$$

where $\Delta$ is a predetermined incremental value.

One advantage of employing Equ. 3 to perform coefficient updating is that only addition and subtraction are required to perform an update. Accordingly, the updating is readily performed by an arithmetic logic unit (ALU). Furthermore, the sign function is readily ascertained by the so-called "exclusive-or" logic function, which is also readily performed by an ALU.

The coefficient updating method of the present invention employs a canonic signed digit (CSD) binary encoding to represent the filter tap coefficients. The CSD encoding will use n binary coefficients C1, C2, ..., Cn, each called a coefficient "nibble". Each binary coefficient having a shift portion Mi so that the decimal value of a filter tap coefficient A is related to its CSD encoding according to the formula

$$A = [C1^* \, 2^{-M1} \, [1 + C2^*2^{-M2} \, [1 + C3^*2^{-M3} \, [1 + ... \, [1 \, + \, Cn \, ^* \, 2^{-Mn}] \, ... \, ] \qquad (3)$$

In general, if n nibbles are employed, the tap coefficient A takes on values from +n to -n. To describe the CSD encoding, each coefficient Ci shall be taken to be a four-bit binary number consisting of a sign bit Si and a three-bit shift code Mi so that Ci = SiMi. Each nibble therefore is representable as a decimal number having a hexadecimal value 1, 2, ..., 8, 9, A, B, C, D, E, F.

As will be explained hereinafter, hexadecimal values 0, 1, 9 and 8 are initially to be excluded from coefficient nibbles. Accordingly, there are $(12)^n$ possible combinations to form a tap coefficient A when using n nibbles. Added to this are "end sequences" employing 0, 1, 9 and 8, as will be explained hereinafter, producing $4^*(12)^{n-1}$ possible end combinations. In addition, there are "tail sequences" employing 0 and 8, producing

$$2 * [\frac{\{\sum\limits_{J=0}^{n-2} 2*J*(12)^J\}}{J} + 2]$$

possible tail combinations.

Accordingly, the total number of useful combinations is given by the formula

$$(12)^n + [4 * (12)^{n-1}] + 2 * [\frac{\{\sum\limits_{J=0}^{n-2} 2*J*(12)^J\}}{J} + 2] \qquad (4)$$

Thus, Equation (4) represents the total number of decimal values possible for a filter tap coefficient A with n nibble coefficients, each being a four-bit (sign + three-bit) binary quantity. For instance, for n = 2, there are 196 possible tap coefficient values; for n = 3, there are 2,356 possible tap coefficient values.

For illustrative purposes only, the coefficient updating method of the present invention will be described in terms of a filter each tap of which has three 4-bit hexadecimal "nibble" coefficients C1, C2 and C3, the most significant being C1 and the least significant being C3. Each coefficient nibble consists of a sign bit S and a three-bit shift code M so that

Ci = SiMi i = 1,2,3.

The convention regarding the sign bit, for this description of the method, is that Si = 1 indicates a negative coefficient value and Si = 0 indicates a positive coefficient value; the values are represented in a one's complement notation. This results in a range of values for each nibble of +1 to -1. In this way, the decimal value of a particular tap coefficient A is given by the formula

$$A = S1 ^* \, 2^{-M}1 \, (1 + S2 ^* \, 2^{-M2} \, (1 + S3 ^* \, 2^{-M}3)). \qquad (5)$$

Since each filter tap coefficient has three 4-bit coefficients, there are 4,096 possible tap coefficient values in all. The particular values described above will be used in this description, but other values can be used within the scope of the present invention.

Using the Canonic Signed Digit (CSD) encoding of these 4,096 values, many of the tap coefficient values are repeated or do not form part of a sequential pattern suitable for use by counters. By not allowing C2 and C3 to take on the values 0,1,9 or 8, and omitting repeated values, a sequential pattern of 2,304 possible CSD encoded values results. The resolution between adjacent values in the resulting 2,304 values is very small and eliminating the codes omitted from the 4,096 values has a negligible effect on the overall resolution of a tap coefficient A.

However, restricting the CSD encoded values to 2,304 values does not allow the resulting tap coefficient A to reach +3 or -3, as would result from a direct application of equation (5). An additional 26 CSD encoded values are placed on each of the values, making a total of 2,356 possible CSD encoded values.

4

These added codes fit into the pattern of the original 2,304 values, by allowing C2 and C3 to take on additional codes outside their normal range, i.e., they take on values 0 and 1.

According to the present invention then, the values that each hexadecimal coefficient can take are as follows:

```
        Most Positive                              Most Negative
        Decimal Value                              Decimal Value

  C1:   0   1   2   3   4   5   6   7   F   E   D   C   B   A   9   8

  C2:   0   1   2   3   4   5   6   7   F   E   D   C   B   A

        restricted to end points only, when C1 = 0 or 8

  C3:   0   1   2   3   4   5   6   7   F   E   D   C   B   A

        restricted to end points only, when C1 = 0 or 8 and C2 = 0 or 8.
```

In accordance with these observations, the coefficient update according to the present invention mandates the following conditions on the 4-bit coefficients C1, C2 and C3:

I) C1 may take on all sixteen hex values 0 through 8, shown above.

II) C2 may take on the twelve hex values 2 through A, shown above, except that when C1 = 0 or 8, i.e., M1 = 0, it can take on the values 1 and 0. C2 never takes on the values 9 or 8.

III) C3 may take on the twelve hex values 2 through A, shown above, except that when C1 = 0 or 8 and C2 = 0 or 8, i.e., M1 = 0 and M2 = 0 it can take on the values 1 and 0. C3 never takes on the values 9 or 8.

IV) When C2 changes sign, the C3 sequence changes direction.

V) when C1 changes sign, the C2 and C3 sequences change direction.

If the sign bit S is omitted from the shift code M, the sequence of M values form a loop:

```
  M:   ┌─2   3   4   5   6   7   7   8   5   4   3   2─┐
       └────────────────────loop────────────────────┘
```

This sequence forms the basis of the coefficient update of the present invention.

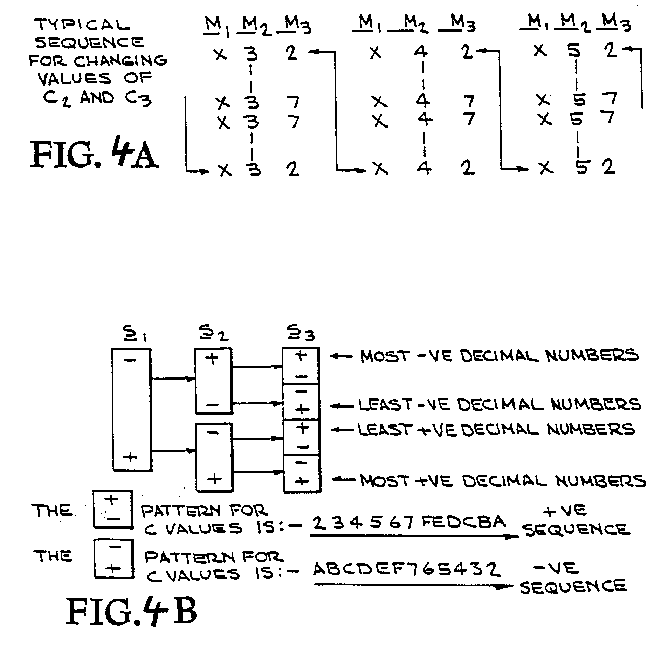

A typical incrementation or decrementation sequence is illustrated in Fig. 4A for 3 nibble CSD format. The diagram shows the movement through the coded tap coefficient values for a particular value of C1 and variable value of C2 and C3 in terms of the shift codes M1, M2 and M3. To restrict the size of the figure, only the representative values of M2 equal to 3, 4 and 5 are shown. However, the pattern shown repeats for all values of M2. The value of M1 is shown in Fig. 4A as "x" which stands for any hexadecimal value that M1 can take on, i.e., "don't care".

Figure 4B diagrammatically illustrates how the signs S1 and S2 of the coefficients C1 and C2 determine the direction of movement through the coded tap values C2 and C3. A ± pattern in Fig. 4B indicates movement in the direction from most positive decimal value to most negative decimal value while a + pattern indicates movement in the direction from most negative to most positive. Selection of the direction of movement is therefore given by the exclusive-OR (ex-or) function; for example for C3:

| C1 | C2 | C3 |
|----|----|----|
| -  | +  | +  |
| -  | -  | -  |
| +  | -  | +  |
| +  | +  | -  |

The coefficient update method described in terms of three nibble coefficients C1, C2 and C3 can be extended to n nibble coefficients C1, C2, ..., Cn in the following manner: the restrictions imposed on coefficient C3 in condition III, supra, also are imposed on coefficients C4, ..., Cn. Condition IV is generalized to: when Cn-1 changes sign, sequence Cn changes direction and condition V is generalized to: when C1 changes sign, the C2, C3, . .., Cn sequences change direction.

With reference again to Fig. 1, filter 10 receives signals which are to be transmitted to a near-end receiver. These signals Xn are conducted on a signal line 12, and are digitally-encoded voice or data signals, as will be appreciated by those skilled in the art. Signals on line 12 are conducted to filter 10 as well as to a block 14. Signals generated by block 14 are then conducted to a four-wire terminating set 16 commonly known as a subscriber line interface circuit (SLIC) which interconnects to a two-wire transmission line 18 and finally to the near-end receiver 20. Block 14 represents all the circuits of the transmit side between the input of filter 10 and four-wire terminating set 16. Block 14 will have a transfer function represented by Hi(Z). For reference purposes hereinafter, the input to filter 10 is denoted by "A" in Fig. 1.

Signals received over line 18 are conducted to the four-wire terminating set 16 and then to a black 22, which represents all the circuits of the receive side between the four-wire terminating set 16 and a summing input of a sum node 24. Block 22 has a transfer function Hj(Z). The signals generated by echo-cancelling filter 10 are applied to a subtracting node of sum node 24. The difference between the signals applied to sum node 24 are therefore generated as error signals En at an output of sum node 24. For reference purposes hereinafter, the output of block 22 is denoted by "B" in Fig. 1.

The desired steady-state response dn of the signal generated at sum node 24 to a sinusoidal signal with amplitude DBV

$$dn = DBV * M(Wi) * \sin(WinT + \phi(wi)) \qquad (Equ. 4)$$

where DBV is the input signal level applied to filter 10, wi is the frequency of the signal applied and DBV*M-(wi) is the desired echo-cancelling amplitude response between points A and B to the applied signal and $\phi$-(wi) is the desired echo-cancelling phase response.

Filter 10 generates a signal given by

$$Yn = DBV * bni * xni \qquad (Equ. 5)$$

and the error signal actually generated by sum node 24 is then

$$E_n = d_n - Y_n = DBV * (M(wi)*\sin(winT + \phi(wi)) - bni*Xni) \qquad (Equ. 6)$$

According to Equ. 6, the magnitude DBV does not affect the sign of the error signal, nor will it control or influence the convergence of an update algorithm. The update algorithm accordingly depends on the sign of the error signal and not the level of the error signal: the input level DBV alters the error (En) signal amplitude. Error signal $E_n$ is provided to filter 10 via line 15.

The use of the CSD update algorithm is accordingly particularly suited to adaptive filter 10 because it relies solely on the sign of the product of $X_n$ and $E_n$, as determined by the exclusive-OR function.

The error ($E_n$) is initially equal to the input signal $d_n$. $E_n$ decreases as filter 10 adapts to the particular line conditions and finally approaches a residual limit. Once the filter has adapted, the residual error will oscillate about a small value.

In simulated adaptions using white noise as input $X_n$ and the CSD update aigorithm for the coefficients of filter 10, convergence to the residual limit is obtained within approximately 5000 iterations.

In order to avoid oscillations of the non-linear CSD filter coefficients after convergence, filter 10 preferably includes a user-selectable error threshold voltage (Kv). After every iteration in updating the filter coefficients, error $E_n$ is compared against Kv; if En is less than Kv then no coefficient updating will be performed.

In an alternative to the use of the error threshold voltage Kv, a relative error threshold voltage value, a, is used, where a is a user-selectable 3-nibble CSD coefficient. The relationship between Kv and $X_n$ is given by $Kv = a*|X_n|$.

$$a = \left| \frac{E_n}{X_n} \right| . \qquad (Equ. 7)$$

If $|E_n| < a^* |X_n|$ , then no adaptation of filter 10 is made.

The Echo Return Loss (ERL) is given by

$$ERL = 20 \log \left| \frac{E_n}{X_n} \right| = -Y \text{ dB} \qquad (Equ. 8)$$

for some value Y.

Substituting a for

$$\left| \frac{E_n}{X_n} \right|$$

gives

$$ERL = 20 \log a = -Y$$

or

$$a = 10^{\frac{-Y}{20}} \qquad (Equ. 9)$$

Accordingly, if a user wants -Ydb for ERL, then a is given by Equ. 9. In simulated adaptions, a value of -20dB for Kv has been employed.

With reference now to Fig. 2, the effect of a near-end talker will flow be described. The preceding description of the invention has been directed only at the presence of a far-end talker and the cancellation of echos therefrom. If there is another talker at the near end, the error $E_n$ becomes a function of both near-end and far-end signals and meaningless for updating coefficients in the adaptive filter 10. Accordingly, the adaptive filter must be inhibited from updating any time a near-end signal is present.

A near-end speech or signal can be detected by an energy-averaging filter 26 shown in Fig. 2. (Elements of Fig. 2 in common with Fig. 1 are denoted by the same reference numerals.) The signal on line 12 applied to adaptive filter 10 (at point A) is also conducted to one pole of a sampling switch 28. The signal applied to the summing input of sum node 24 (at point B) is also connected to a second pole of switch 28. The signals at points A and B are denoted Ai and Bi.

A near end speech or signal is detected by sampling the Signals Ai and Bi applied to switch 28. Energy-averaging filter 26 has an input terminal connected to the moveable contact of switch 28 and can accordingly sample the signals Ai and Bi over time.

Energy-averaging filter 26 contains a low-pass filter, which will be described hereinafter in connection with Fig. 3, which receives signal Ai or Bi and generates a low-pass filtered version ˜Ai and ˜Bi, respectively, of the absolute value of the signal Ai or Bi, depending on the position of switch 28. The signals ˜Ai + 1 and ˜Bi + 1 are related to ˜Ai, ˜Bi, Ai and Bi according to

$$\tilde{A}(i+1) = \beta \tilde{A}(i) + \alpha|A(i)|$$
$$\tilde{B}(i+1) = \beta \tilde{B}(i) + \alpha|B(i)| \qquad (Equ. 10)$$

where $\alpha$ and $\beta$ are the low-pass filter coefficients which will be described in connection with Fig. 3.

Due to unknown line delay, a near end speech or signal is detected if

$$\tilde{B}i >= \gamma \cdot \max[\tilde{A}(i), \tilde{A}(i-1),..., \tilde{A}(i-N-1)] \qquad (Equ. 11)$$

where $\gamma$ is the echo-path loss through 4-wire terminating block 16.

An ALU 40 would receive the signal YAV(nt) generated by energy-averaging filter 26 via line 44 and would implement Equ. 11 as will be appreciated by those skilled in the art. In a simulation, $\gamma$ is determined at a frequency of 1,000 Hz. The ALU would be connected to adaptive filter 10 via line 42 and would inhibit coefficient updating at any time Equ. 11 indicates detection of near end speech or signals.

With reference now to Fig. 3, energy-averaging filter 26 is preferably realized as a two-tap single-pole low-pass digital filter. Signals sampled by switch 28 X(Z) are conducted to a multiplier node 30 which also receives the filter coefficient $\alpha$. The signal generated by multiplier node 30 is conducted to an input of a sum node 32. Sum node 32 generates a signal conducted to delay 34. The delayed signal is conducted to a multipler node 36 which also receives the filter coefficient $\beta$. The signal generated by multiplier node 36 is conducted to a second input of sum node 32. The low-pass signals Yav(nT) are generated at the output of filter 26 as the signals generated by sum node 32.

The low-pass filter 26 of Fig. 3 thus implements one of the equations 10, depending on whether sampling switch 28 is connected to point A or point B.

Low-pass filter 26 realizes the frequency-domain transfer function

$$H(Z) = \frac{\alpha}{1 - \beta_7^{-1}} \qquad (Equ. \ 12)$$

In a preferred embodiment, $\alpha = 0.00975$ and $\beta = 0.990234$.

## Claims

1. Echo-cancelling method in a telecommunication network including at least a first and second transceiver, said first transceiver generating signals to said second transceiver, said method suppressing echo signals reflected by said telecommunication network and received by said first transceiver, wherein said first transceiver includes an adaptive digital filter (10) employing a plurality of tap coefficients to generate an echo correction signal, said echo correction signal being adapted by altering respective filter tap coefficients, characterized by the following steps:

    (a) updating said adaptive digital filter coefficients according to a non-linear canonic signed digit algorithm;

    (b) determining the average energy in a signal transmitted by said first transceiver over a predetermined number of time intervals;

    (c) determining the average energy in a signal received by said first transceiver from said second transceiver; and

    (d) inhibiting said coefficient updating of step (a) whenever said energy measured at step (c) equals or exceeds a predetermined function of said energy measured at step (b).

2. Echo-cancelling method according to claim 1, wherein said adaptive digital filter (10) receives signals $X_n$ to be transmitted to said second transceiver and generates an echo correction signal $Y_n$ therefrom, said echo correction signal being subtracted from the echo signal to form an error signal $E_n$, characterized in that said coefficient updating step (a) is repeated until $E_n$ is less than a predetermined error threshold voltage $K_v$.

3. Echo-cancelling method according to claim 2, characterized in that said $K_v$ value is $a^*|X_n|$, where a is a predetermined 3-nibble canonic signed digit (CSD) coefficient.

4. Echo-cancelling method according to claim 3, characterized in that a predetermined echo-return loss -Y dB is user-specified and wherein $a = 10^{-Y/20}$.

5. An apparatus adaptable for use at a communication station having a receive line (15) for receiving an incoming signal $(X_n)$ comprising a plurality of incoming signal bits and a transmit line (21) for transmitting an outgoing signal (Rn), the apparatus comprising:

    a summer means (24) for summing said outgoing signal (Rn) with an echo correction signal (Yn) and producing a corrected output signal (En) representative of said outgoing signal on an output line (23); and

    a digital filter means (10) for producing said echo correction signal (Yn);

    said digital filter means being operatively connected to said receive line (15), said summer means (24), and said output line (23);

    said digital filter means (10) comprising updating means for comparing said incoming signal (Xn) with said corrected output signal (En) to determine updated filter coefficients;

    said digital filter means (10) thereby updating said echo correction signal to produce a first iteration echo correction signal;
**characterized in that**:
said updating means operate according to a canonic signed digit algorithm; and
said digital filter means comprise means for continuing said comparison and said updating until said corrected output signal is within a predetermined value of zero.

6. Apparatus as recited in claim 5, characterized in that the apparatus further comprises signal averaging means (26) for sampling and comparing said incoming signal with said outgoing signal, and logic means (40) for controlling said digital filter means;
said signal averaging means being operatively connected to said receive line and said transmit line and producing a comparison signal ($Y_{AV}(nT)$) to said logic means;
said comparison signal being representative of the difference between said incoming signal and said outgoing signal; and
said logic means (40) allowing and inhibiting said updating in response to said comparison signal.

7. Apparatus as recited in claim 6, characterized in that said logic means (40) inhibits said updating when said comparison signal indicates that said outgoing signal (Rn) is equal to or greater than said incoming signal (Xn).

8. Apparatus as recited in claim 5, characterized in that said digital filter means (10) updates said value for each said respective filter tap according to said canonic signed digit algorithm by effecting a bit shift in a direction according to a sign, said sign being appropriate to reduce said corrected output signal.

9. Apparatus as recited in claim 8, characterized in that said canonic signed digit algorithm directs updating of said value for each respective filter tap coefficient according to a relationship, said relationship being:

$$h_i = B_1 2^{-M1} + B_2 2^{-M2} + ... + B_n 2^{-Mn}$$

where $M_i$ = number of said bit shifts and $M_i < M_{i+1}$,
$B_i$ = said sign, and $B_i = \pm 1$,
n = number of said respective filter tap coefficients.

10. Apparatus as recited in any one of the claims 5, 6 or 8 further comprising:
an analog-to-digital converter (ADC) for sampling an input audio signal and for generating digital signals representing the amplitude of said sample;
a digital-to-analog converter (DAC) for converting digital signals generated by a transmitter to analog form suitable for transmission over said transmit line; characterized by:
a sampling switch (28) responsive to said transmitter generated digital signals and to said ADC generated signals for selectively sampling either said signals applied thereto; and
an averaging circuit (26) responsive to said sampled signals for generating an average energy value therefrom.

11. Apparatus as recited in claims 7 and 10, characterized in that said logic means (40) inhibit the coefficient updating when said average energy in said ADC generated signals equals or exceeds a predetermined function of the average energy of a predetermined number of said transmitter generated signals.

12. Apparatus as recited in claim 11, characterized in that said averaging circuit (26) is an adaptive multi-tap digital low-pass filter.

13. Apparatus as recited in claim 10 or claim 12, characterized in that said averaging circuit (26) is a two-tap, single pole filter realizing the transfer function

$$H\ (Z)\ =\ \frac{\alpha}{1\ -\ \beta Z^{-1}}$$

14. Apparatus as recited in claim 13, characterized in that the value $\alpha$ = 0.00975 and the value $\beta$ = 0.990234.

**Patentansprüche**

1. Echo-Kompensationsverfahren in einem Fernmeldenetz mit mindestens einem ersten und zweiten Transceiver, wobei der erste Transceiver Signale an den zweiten Transceiver erzeugt, das Verfahren vom Fermeldenetz reflektierte und vom ersten Transceiver empfangene Echo-Signale unterdrückt, wobei der erste Transceiver einen adaptiven Digital-Filter (10) besitzt, der eine Vielzahl von Abstufungskoeffizienten zur Erzeugung eines Echo-Korrektursignals verwendet, wobei das Echo-Korrektursignal durch Ändern des entsprechenden Abstufungs-Filterkoeffizienten angepaßt wird,
gekennzeichnet durch die folgenden Schritte:
(a) Aktualisieren der adaptiven digitalen Filterkoeffizienten gemäß einem nichtliniaren kanonischen mit Vorzeichenstelle versehenen Algorithmus;
(b) Bestimmen der von dem ersten Transceiver in einem Signal gesendeten durchschnittlichen Energie über eine vorbestimmte Anzahl von Zeitintervallen;
(c) Bestimmen der durch den ersten Transceiver vom zweiten Transceiver in einem Signal empfangenen durchschnittlichen Energie; und
(d) Sperren des Aktualisierens des Koeffizienten von Schritt (a), wann immer die in Schritt (c) gemessene Energie eine vorbestimmte Funktion der in Schritt (b) gemessenen Energie erreicht oder überschreitet.

2. Echo-Kompensationsverfahren nach Anspruch 1, wobei der adaptive Digital-Filter (10) an den zweiten Transceiver zu übertragende Signale $X_n$ empfängt und ein Echo-Korrektursignal $Y_n$ hiervon erzeugt, wobei das Echo-Korrektursignal vom Echo-Signal subtrahiert wird, um ein Fehlersignal $E_n$ zu bilden, dadurch gekennzeichnet, daß der Koeffizienten-Aktualisierungs-Schritt (a) wiederholt wird, bis $E_n$ weniger als eine vorbestimmte Filter-Schwellenspannung $K_v$ ist.

3. Echo-Kompensationsverfahren nach Anspruch 2, dadurch gekennzeichnet, daß der $K_v$ -Wert a*| $X_n$| ist, wobei (a) ein vorbestimmter kanonischer mit Vorzeichenstelle versehener (CSD) 3-Nibble-Koeffizient ist.

4. Echo-Kompensationsverfahren nach Anspruch 3, dadurch gekennzeichnet, daß ein vorbestimmtes Echo-Dämpfungsmaß -Y dB Benutzerspezifiziert ist und wobei a = $10^{-Y/20}$.

5. Vorrichtung, verwendbar zur Benutzung an einer Fernmeldeanlage mit einer Empfangsleitung (15) zum Empfangen eines eingehenden Signals ($X_n$), das eine Vielzahl von eingehenden Signal-Bits aufweist, und mit einer Sendeleitung (21) zum Senden eines abgehenden Signals (Rn), wobei die Vorrichtung aufweist:
eine Summier-Vorrichtung (24) zum Addieren eines abgehenden Signals (Rn) mit einem Echo-Korrektursignal (Yn) und Erzeugen eines für das auf einer Ausgangsleitung (23) abgehende Signal, repräsentativen, korrigierten Ausgangssignals (En); und
eine digitale Filter-Einrichtung (10) zum Erzeugen des Echo-Korrektursignals (Yn);
wobei die digitale Filter-Einrichtung betriebsfähig an die Empfangsleitung (15), die Summier-Einrichtung (24) und die Ausgangsleitung (23) geschaltet ist;
wobei die digitale Filter-Einrichtung (10) eine Aktualisierungs-Einrichtung zum Vergleichen des Eingangssignals (Xn) mit dem korrigierten Ausgangssignal (En) aufweist, um aktualisierte Filterkoeffizienten zu bestimmen;
wobei die digitale Filter-Einrichtung (10) dadurch das Echo-Korrektursignal aktualisiert, um ein erstes Iterations-Echo-Korrektursignal zu gewinnen;
**dadurch gekennzeichnet, daß:**

EP 0 310 055 B1

die Aktualisierungs-Einrichtung nach einem kanonischen mit Vorzeichenstelle versehenen Algorithmus arbeitet; und

die digitale Filter-Einrichtung Einrichtungen zur Fortführung des Vergleichens und des Aktualisierens bis das korrigierte Ausgangssignal innerhalb eines vorbestimmten Werts von Null ist, aufweist.

6. Vorrichtung nach Anspruch 5, dadurch gekennzeichnet, daß die Vorrichtung weiter eine Signal-mittelnde Einrichtung (26) zum Abtasten und Vergleichen des eingehenden Signals mit dem abgehenden Signal und eine Logik-Einrichtung (40) zum Steuern der digitalen Filter-Einrichtung aufweist;

wobei die Signal-mittelnde Einrichtung betriebsfähig an die Empfangsleitung und die Sendeleitung geschaltet ist und an die Logik-Einrichtung ein Vergleichssignal ($Y_{AV}(nT)$) erzeugt;

wobei das Vergleichssignal die Differenz zwischen dem eingehenden und abgehenden Signal repräsentiert; und

wobei die Logik-Einrichtung (40) die Aktualisierung in Antwort zum Vergleichssignal erlaubt und sperrt.

7. Vorrichtung nach Anspruch 6, dadurch gekennzeichnet, daß die Logik-Einrichtung (40) die Aktualisierung sperrt, wenn das Vergleichssignal anzeigt, daß das abgehende Signal (Rn) gleich oder größer ist als das eingehende Signal (Xn).

8. Vorrichtung nach Anspruch 5, dadurch gekennzeichnet, daß die digitale Filter-Einrichtung (10) den Wert für jede der jeweiligen Filter-Stufen nach dem kanonischen mit Vorzeichenstelle behafteten Algorithmus durch Durchführung einer Bit-Verschiebung in einer Richtung gemäß eines Vorzeichens, wobei das Vorzeichen geeignet ist, das korrigierte Ausgangsignal abzuschwächen, aktualisiert.

9. Vorrichtung nach Anspruch 8, dadurch gekennzeichnet, daß der kanonische mit Vorzeichenstelle versehene Algorithmus das Aktualisieren der Werte für jeden betreffenden Filter-Abstufüngs-Koeffizienten nach einer Beziehung steuert, wobei die Beziehung lautet:

$$h_i = B_1 2^{-M1} + B_2 2^{-M2} + ... + B_n 2^{-Mn}$$

mit $M_i$ = Zahl der Bit-Schiebeoperationen und $M_i < M_{i+1}$,
     $B_i$ = Vorzeichen, und $B_i = \pm 1$,
     n = Zahl der betreffenden Filter-Abstufungs-Koeffizienten.

10. Vorrichtung nach einem der Ansprüche 5, 6 oder 8, die zusätzlich aufweist:

einen Analog-Digital-Wandler (ADC) zum Abtasten eines Eingangs-Audiosignals und zum Erzeugen eines Digitalsignals, das die Amplitude des Abtastwertes darstellt;

einen Digital-Analog-Wandler (DAC) zum Umwandeln von einem Sender erzeugten digitalen Signalen in eine für die Übertragung über die Sendeleitung geeignete analoge Form;

gekennzeichnet durch:

einen Abtastschalter (28), ansprechend auf die vom Sender erzeugten digitalen Signale und auf die vom ADC erzeugten Signale zum selektiven Abtasten beider dort angelegter Signale; und

einen Mittelwert bildenden Schaltkreis (26), ansprechend auf die abgetasteten Signale zur Erzeugung eines Durchschnitts-Energiewertes hiervon.

11. Vorrichtung nach den Ansprüche 7 und 10, dadurch gekennzeichnet, daß die Logik-Einrichtung (40) das Aktualisieren der Koeffizienten sperrt, wenn die mittlere Energie in den vom ADC erzeugten Signalen eine vorgegebene Funktion der mittleren Energie einer vorbestimmten Anzahl von dem Sender erzeugten Signalen erreicht oder überschreitet.

12. Vorrichtung nach Anspruch 11, dadurch gekennzeichnet, daß der den Mittelwert bildende Schaltkreis (26) ein Multi-Abstutungs-Digital-Tiefpaßfilter ist.

13. Vorrichtung nach Anspruch 10 oder 12, dadurch gekennzeichnet, daß der den Mittelwert bildende Schaltkreis (26) ein einpoliger 2-Stufen-Filter ist, der die Übertragungsfunktion

11

$$H\ (Z)\ =\ \frac{\alpha}{1\ -\ \beta\ \underset{Z}{^{-1}}}$$

hat.

14. Vorrichtung nach Anspruch 13, dadurch gekennzeichnet, daß der Wert $\alpha$ = 0.00975 und der Wert $\beta$ = 0.990234.

**Revendications**

1. Procédé de suppression d'écho dans un réseau de communication comportant au moins un premier et un second émetteurs-recepteurs, ledit premier émetteur-récepteur engendrant des signaux vers ledit second émetteurrécepteur, ledit procédé supprimant les signaux d'écho réfléchis par ledit réseau de télécommunication et reçus par ledit premier émetteur-récepteur, dans lequel ledit premier émetteur-récepteur comporte un filtre numérique adaptatif (10) utilisant plusieurs coefficients de prise pour engendrer un signal de correction d'écho, ledit signal de correction d'écho étant adapté par modification des coefficients respectifs de prise du filtre, caractérisé en ce qu'il comporte les étapes consistant à:

   (a) mettre à jour lesdits coefficients du filtre numérique adaptatif en fonction d'un algorithme numérique non linéaire affecté d'un signe canonique,

   (b) déterminer l'énergie moyenne contenue dans un signal transmis par ledit premier émetteur-récepteur sur un nombre pré-déterminé d'intervalles de temps,

   (c) déterminer l'énergie moyenne existant dans un signal reçu par ledit premier émetteur-récepteur en provenance dudit second émetteur récepteur, et

   (d) empêcher ladite mise à jour des coefficients de l'étape (a) à chaque fois que ladite énergie mesurée au niveau de l'étape (c) est égale ou dépasse une fonction prédéterminée de ladite énergie mesurée au niveau de l'étape (b).

2. Procédé de suppression d'écho selon la revendication 1, dans lequel ledit filtre numérique adaptatif (10) reçoit des signaux $X_n$ destinés à être transmis vers ledit second émetteur-récepteur et engendre un signal de correction d'écho $Y_n$ à partir de ceux-ci, ledit signal de correction d'écho étant soustrait du signal d'écho pour former un signal d'erreur $E_n$, caractérisé en ce que ladite étape (a) de mise à jour des coefficients est répétée jusqu'à ce que $E_n$ soit plus petit qu'une tension $K_v$ formant seuil d'erreur pré-déterminé.

3. Procédé de suppression d'écho selon la revendication 2, caractérisé en ce que ladite valeur $K_v$ et $a^*|X_n|$, dans laquelle a est un coefficient numérique marqué d'un signe canonique à trois quartets (CSD).

4. Procédé de suppression d'écho selon la revendication 3, caractérisé en ce qu'une perte écho retour prédéterminée -Y dB est spécifiée à l'utilisateur et dans leque a = $10^{-Y/20}$.

5. Dispositif pouvant être adapté pour être utilisé au niveau d'un poste de communication comportant une ligne de réception (15) destinée à recevoir un signal entrant (Xn) comportant plusieurs bits de signal entrant et une ligne de transmission( 21) destinée à transmettre un signal sortant (Rn), le dispositif comportant:

   des moyens (24) formant sommateur pour faire la somme dudit signal sortant (Rn) et du signal de correction d'écho (Yn) et produire un signal de sortie corrigé (En) représentatif dudit signal sortant sur une ligne de sortie (23), et

   des moyens (10) formant filtre numérique destiné à produire ledit signal de correction d'écho (Yn),

   lesdits moyens formant filtre numérique étant reliés de manière opérationnelle à ladite ligne de réception (15), auxdits moyens (24) formant sommateur, et a ladite ligne de sortie (23),

   lesdits moyens (10) formant filtre numérique comportant des moyens de mise à jour pour comparer ledit signal entrant (Xn) audit signal de sortie corrigée (En) pour déterminer des coefficients mis à jour de filtre,

   lesdits moyens (10) formant filtre numérique mettant ainsi à jour ledit signal de correction d'écho pour produire un premier signal de correction d'écho par itération,
caractérisé en ce que :

lesdits moyens de mise à jour agissent en fonction d'un algorithme numérique marqué d'un signe canonique, et

lesdits moyens formant filtre numérique comporte des moyens pour poursuivre ladite comparaison et ladite mise à jour jusqu'à ce que ledit signal de sortie corrigée soit à la valeur pré-déterminée de zéro.

6. Dispositif selon la revendication 5, caractérisé en ce que ledit dispositif comporte en outre des moyens (26) de réalisation de la moyenne des signaux pour échantillonner et comparer ledit signal entrant audit signal sortant, et des moyens logiques (40) pour commander lesdits moyens formant filtre numérique,

lesdits moyens pour réaliser une moyenne étant reliés de manière opérationnelle à ladite ligne de réception et à ladite ligne de transmission et produisant un signal de comparaison ($Y_{AV}(nT)$) vers ledits moyens logiques,

ledit signal de comparaison étant représentatif de la différence existant entre ledit signal entrant et ledit signal sortant et,

lesdits moyens logiques (40) permettant et empêchant ladite mise à jour en réponse audit signal de comparaison.

7. Dispositif selon la revendication 6, caractérisé en ce que lesdits moyens logiques (40) empêchent ladite mise à jour lorsque ledit signal de comparaison indique que ledit signal sortant (Rn) est supérieur ou égal audit signal entrant (Xn).

8. Dispositif selon la revendication 5, caractérisé en ce que lesdits moyens (10) formant filtre numérique mettent à jour ladite valeur pour chacune desdites prises de filtre respectives en fonction dudit algorithme numérique marqué d'un signe canonique en effectuant un déplacement de bit dans une direction en fonction d'un signe, ledit signe étant approprié pour réduire ledit signal de sortie corrigée.

9. Dispositif selon la revendication 8, caractérisé en ce que ledit algorithme numérique marqué d'un signe canonique dirige la mise à jour de ladite valeur pour chaque coefficient de prise de filtre respectif en fonction d'une relation, ladite relation étant

$$h_i = B_1 2^{-M1} + B_2 2^{-M2} + ... + B_n 2^{-Mn}$$

dans laquelle $M_i$ = nombre de déplacements de bit et $M_i < M_{i+1}$,
$B_i$ = ledit signe, et $B_i$ = + ou - 1,
n = nombre dedits coefficients de prise de filtre respectifs.

10. Dispositif selon l'une quelconque des revendications 5, 6 ou 8 comportant en outre:

un convertisseur analogique-numérique (ADC) pour échantillonner un signal audio d'entrée et pour engendrer des signaux numériques représentant l'amplitude dudit échantillon,

un convertisseur numérique-analogique (DAC) pour convertir les signaux numériques émis par un émetteur sous forme analogique adaptée pour la transmission sur ladite ligne de transmission, caractérisé en ce que:

un commutateur (28) d'échantillonnage sensible auxdits signaux numériques engendrés par l'émetteur et auxdits signaux engendrés par ledit convertisseur analogique numérique (ADC) pour échantillonner de manière sélective l'un quelconque desdits signaux qui lui sont appliqués, et

un circuit (26) de détermination de moyenne sensible auxdits signaux échantillonnés pour engendrer une valeur d'énergie moyenne à partir de ceux-ci.

11. Dispositif selon les revendications 7 et 10, caractérisé en ce que lesdits moyens logiques (40) empêchent la mise à jour du coefficient lorsque ladite énergie moyenne dans lesdits signaux engendrés par ADC sont égaux ou dépassent une fonction prédéterminée de l'énergie moyenne d'un nombre pré-déterminé desdits signaux engendrés par l'émetteur.

12. Dispositif selon la revendication 11, caractérisé en ce que ledit circuit (26) de calcul de moyenne est un filtre passe-bas numérique adaptatif à plusieurs prises.

**13.** Dispositif selon la revendication 10 ou 12, caractérisé en ce que ledit circuit (26) de calcul de moyenne est un filtre à pôle unique, à deux prises, réalisant la fonction de transfert:

$$H\ (Z)\ =\ \frac{\alpha}{1-\beta\, z^{-1}}$$

**14.** Dispositif selon la revendication 13, caractérisé en ce que $\alpha$ = 0,00975 et $\beta$ = 0,990234.

**FIG. 1**

**FIG. 2**

**FIG. 3**

TYPICAL SEQUENCE FOR CHANGING VALUES OF $C_2$ AND $C_3$

FIG. 4A

FIG. 4B